# FASCICULE DE BREVET EUROPEEN

(11) **EP 1 240 618 B1**
(45) Date de publication et mention de la délivrance du brevet: **28.05.2003**
(21) Numéro de dépôt: 00988918.9
(22) Date de dépôt: 14.12.2000
(51) Int. Cl.: G06K 17/00, A01K 11/00

(54) **PROCEDE ET INSTALLATION D'IDENTIFICATION D'ANIMAUX**
VEFAHREN UND ANLAGE ZUR IDENTIFIZIERUNG VON TIEREN
METHOD AND INSTALLATION FOR IDENTIFYING ANIMALS

(30) Priorité: 17.12.1999 FR 9915936
(43) Date de publication de la demande: 18.09.2002
(73) Titulaire: Farmexpress.Com S.A., 1050 Bruxelles (BE)
(72) Inventeur: MARTIN, Jacques, G., F-69570 Dardilly (FR)
(74) Mandataire: Ravina, Bernard
(86) Numéro de dépôt international: FR0003538
(87) Numéro de publication internationale: WO01045037

(56) Documents cités:
- WO-A-98/41084
- WO-A-99/45761
- US-A- 5 324 925
- US-A- 5 455 575
- US-A- 5 499 626
- US-A- 5 751 246

## Description

La présente invention concerne un procédé et une installation permettant l'identification d'animaux et la gestion des informations et évènements relatifs à ces animaux en vue de maîtriser la traçabilité des animaux et des informations.

Ces informations concernent les données relatives à la vie de l'animal telles que par exemple sa date et son lieu de naissance, sa race, ses différents propriétaires ou détenteurs, ses déplacements, ses maladies ou toute autre information et événements tels que par exemple le traitement vétérinaire, les données relatives à son état physique, etc....

Le souci de traçabilité, l'origine et des étapes de la vie d'un animal est particulièrement prédominant ces dernières années notamment en ce qui concerne les bovins, ceux-ci n'étant que l'un des cas d'application de l'invention qui peut concerner également les ovins, les porcins ou tout autre type d'animal à partir du moment où l'animal est doté d'un moyen d'identification.

Un usage aujourd'hui courant pour assurer le suivi des animaux est l'identification visuelle associée à un passeport papier. Dans certaines applications, les données concernant l'animal peuvent êtres stockées dans des bases de données nationales ou régionales. Le passeport papier doit en théorie suivre tous les déplacements de l'animal et recenser des données qui le concernent.

L'utilisation du support papier pose des problèmes considérables, notamment dus au fait de devoir écrire manuellement sur le passeport les données concernant l'animal. D'autre part, à l'usage, l'état du support papier se dégrade très rapidement et rend difficile toute lecture et tri automatique. Enfin, la liaison avec des bases de données nécessite de reporter ces informations sur un support informatique tel qu'un minitel par exemple pour communiquer avec la base de données centralisée.

Le brevet international WO99/45761 propose une méthode et une installation pour collecter des informations sur le bétail et un système de gestion de ces informations depuis sa conception jusqu'à sa consommation en qualité de viande.
Ce brevet est basé sur l'utilisation d'éléments d'identification portés par l'animal, de préférence type radio-fréquence, sur l'utilisation d'un lecteur mobile adapté à différents types de transpondeurs radio-fréquence, destiné à être utilisé sur une piste de passage obligé de l'animal.
Ce lecteur radio-fréquence a l'avantage d'être sans fil. Ce brevet décrit un système dans lequel les données reçues par le lecteur peuvent être communiquées à des bases de données dédiées, par exemple celle de l'éleveur naisseur, celle de l'éleveur engraisseur, celle de l'abatteur, celle du boucher,... ces données pouvant être communiquées à une base de données centrale.

Dans ce brevet, le lecteur est associé à une carte de transpondeurs, chacun étant dédié à un événement particulier qui sera lu par le lecteur.
Ces données sont transmises à un système multi-port qui collecte l'information du lecteur.
Le système multi-port indépendant du lecteur, peut par des ports dédiés à un type d'événement spécifique, recevoir des informations complémentaires communiquées par le personnel de l'exploitation, par exemple l'éleveur.
Ces données relevées par le lecteur ou introduites dans le système multi-port sont communiquées à un ordinateur central de préférence par radio-fréquence.
Cet ordinateur central peut être placé sur un réseau Internet et en relation avec d'autres bases de données.

Ce système et le dispositif de mise en oeuvre sont particulièrement complexes. Ils supposent outre la lecture d'identification, un travail d'introduction des données, soit par lecture de la carte de transpondeurs dédiés, soit par sélection d'un port dédié.
Les informations sont lisibles sur l'ordinateur conçu comme une unité fixe ou mobile à partir de laquelle les données seront envoyées sur les banques de données qui peuvent communiquer entre elles.
Ce système permet à partir de l'identification par le lecteur utilisé sur le terrain de l'animal, d'obtenir sur l'ordinateur indépendant du lecteur les informations relatives à l'animal, et qui sont stockées dans l'ordinateur ou dans la banque de données ou l'une des banques de données.

La technologie de ce brevet qui apparaît comme étant théoriquement satisfaisante ne l'est pas si on la reporte à la masse du cheptel.
En Europe, le cheptel Bovin est de l'ordre de 80 millions de têtes réparties sur un million de propriétés et appelés à se retrouver sur un million de marchés au bétail ou dans un millier d'abattoirs.

Les intervenants dans ce secteur se répartissent comme suit :
- environ un million de propriétaires éleveurs ;
- environ 20.000 transporteurs ;
- environ 50.000 médecins vétérinaires,
non compris les agents publics ou para-publics ayant des missions d'intervention sur le bétail, chaque intervention étant un événement dans le cursus de l'animal qui doit être enregistré.
On peut penser que sur le chiffre européen, entre les naissances et l'abattage, plus de 200 millions d'évènements sont à enregistrer dans les banques de données.
Il est clair que la technologie du passeport papier est complètement inadaptée.

La technologie du brevet WO99/45761 est un progrès par rapport à la précédente ; elle n'est cependant pas parfaite notamment au niveau de l'enregistrement en temps réel des données sur la banque de données et de la certification de ceux-ci par la base de données.

Le recours à un ordinateur intermédiaire entre le lecteur et la base de donnée peut être une source double d'erreurs ou de désordres.
Dans la relation entre le lecteur et l'ordinateur, le recours à des systèmes dédiés, transpondeurs ou ports, peut également poser problème.
La communication entre deux ordinateurs intermédiaires n'est possible que par mise en relation des différentes bases de données entre elles.
Cette technologie utilisable sur le terrain pour la lecture de reconnaissance de l'animal, n'est pas adaptée à l'exploitation des données sur le terrain ou à leurs modifications sur le terrain.

Le brevet US 5 324 925 décrit un terminal portable avec mémoire clavier, lecteur d'informations et moyen de transmission vers une unité centrale.
Les données d'un terminal peuvent être transférées dans la mémoire d'un autre terminal à travers une unité centrale par mise en communication de celle-ci avec les terminaux concernés.
Ce brevet conçu pour le personnel médical mobile en visite chez les malades n'est pas transposable aux secteurs techniques relatifs au suivi des animaux dans la mesure où la mise en communication avec l'unité centrale n'est possible qu'à poste fixe ou à proche distance de l'unité centrale.
Cela exclut une utilisation sur le terrain par exemple par mise en communication directe de deux terminaux pour constater un transfert.

La présente invention a pour objectif d'obvier à ces inconvénients en proposant un nouveau procédé et une installation pour l'identification d'animaux et la gestion des informations relatives aux dits animaux en vue de maîtriser la traçabilité des animaux et des informations. L'installation permet d'identifier de manière certifiée, rapide voire automatique les animaux et facilite la saisie et le transfert des informations relatives à ces animaux entre intervenants et/ou vers une base de données centralisée.
L'installation d'identification d'animaux et de gestion des informations relatives aux dits animaux comprend une base de données centralisée regroupant des informations sur les dits animaux portant un identifiant destiné à être lu par un système de lecture, la base de données centralisée, l'identifiant et le système de lecture étant reliés, est caractérisée en ce que :
- l'installation comprend un ou plusieurs systèmes autonomes de communication pour l'utilisateur,
- le dit système autonome intégrant
   - le système de lecture de l'identifiant,
   - des moyens de communication avec la base de données centralisée,
   - une mémoire intégrant des informations propres à l'animal et destinées à être dupliquées dans la base de données centralisée,
   - des moyens de communication directs entre au moins un système autonome et un autre système autonome sans passer par la base de données centralisée.

D'autres avantages et caractéristiques de l'invention apparaîtront à la lecture de la description ci-après, de plusieurs formes de réalisations données à titre d'exemple non limitatif et illustré par les dessins joints, dans lesquels :

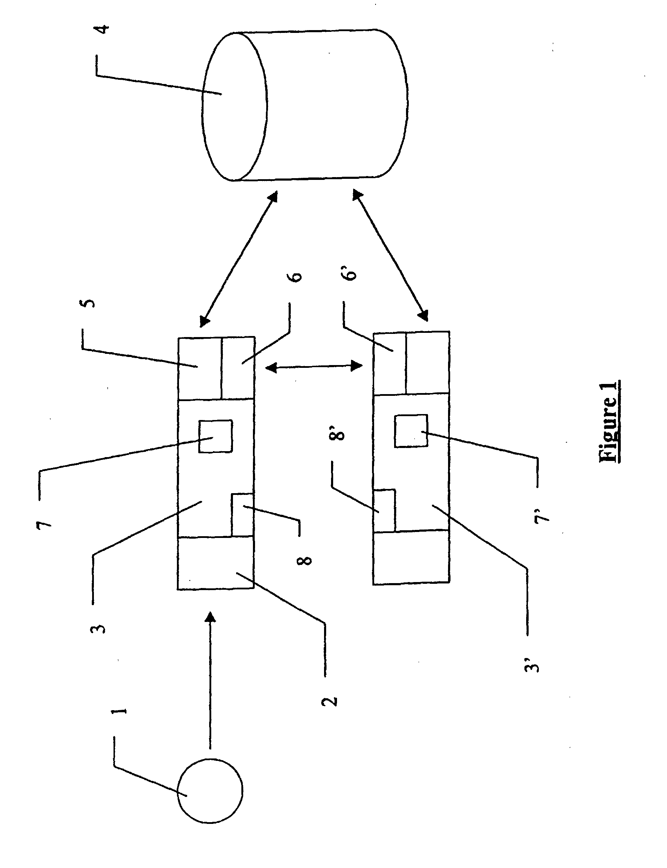

- la figure 1 représente les différents éléments matériels de l'installation.
Telle que représentée sur la figure 1, l'installation selon l'invention comporte au moins :
- un identifiant (1) porté par l'animal,
- un système de lecture (2) de l'identifiant (1),
- un système autonome (3) de communication avec l'utilisateur, de traitement et de stockage dans une mémoire (7) des informations relatives à au moins un animal, les informations étant réparties en bases de données internes de la mémoire (7) et qui sont dupliquées dans la base de données centralisée (4),
- une liaison entre le système autonome (3) et le système de lecture (2),
- une base de données centralisée (4) regroupant des informations sur les animaux,
- des moyens de communication (5) d'informations entre le système autonome (3) et la base de données centralisée (4),
- des moyens de communication (6) et (6') entre un système autonome (3) et un autre système autonome (3').

L'identifiant (1) de l'animal peut être constitué par tout moyen d'émission d'un signal caractéristique permettant d'identifier l'animal. Cet identifiant peut donc par exemple être une puce électronique, portée à l'oreille de l'animal, implantée sous la peau de l'animal ou encore ingérée (communément appelée « bolus »). Plus simplement, l'identifiant peut être une marque visuelle qui sera lue par un opérateur humain.

Cet identifiant peut également être constitué d'un code barre par exemple sans que l'on ne sorte du cadre de la présente invention.

Le système de lecture (2) dépend donc de l'identifiant utilisé. Dans le cas d'une puce électronique émettant un signal radio, le système de lecture sera donc constitué par un récepteur radio-fréquence. Le numéro d'identification d'un animal est, en France par exemple, constitué d'un numéro à 10 chiffres ainsi que deux lettres pour identifier le pays d'origine de l'animal.

Le principe d'émission d'un signal électronique correspondant à ce numéro et de lecture à distance du numéro fait partie des connaissances de l'homme de l'art.

On peut ainsi lire automatiquement le numéro d'identification d'un animal en s'en approchant à quelques mètres ou quelques dizaines de centimètres.

Le système autonome (3) comporte au moins une mémoire (7) de stockage d'informations, un module de traitement des données et une interface avec l'utilisateur humain. Le module de traitement des données peut être constitué par un microcontrôleur. L'interface de saisie et de lecture d'informations peut être constituée par tous moyens connus. Dans le cas de l'utilisation dans un environnement d'élevage, l'utilisation de commandes et de restitution des informations par voie vocale semble approprié. Dans tous les cas, la commande des fonctions du système autonome devra être très simple. Le système autonome pourra donc être pourvu d'un clavier avec un minimum de touches permettant d'accéder à différentes fonctions telles que la lecture de l'identifiant ou la connexion avec la base de données par exemple.

La mémoire (7) est prévue pour contenir deux types d'informations : Des informations dynamiques, effaçable et modifiables, concernant les animaux et leurs caractéristiques et des informations statiques et ineffaçables concernant l'identification du détenteur de ladite mémoire. La mémoire contient donc les informations dans des bases de données qui lui sont propres et qui sont dupliquées dans la base de données centralisée (4). Les informations contenues dans la mémoire (7) permettront de certifier de façon unique et infalsifiable l'identité du détenteur ou de l'utilisateur du système autonome. Cette mémoire (7) peut être intégrée au système autonome ou portée sur une carte à puce amovible pouvant être introduite dans le système tel qu'il sera décrit plus loin.

Il est prévu que chaque personne ayant la capacité d'agir sur l'animal (propriétaire ou détenteur, vétérinaire, transporteur ou autre) ait en sa possession un système autonome (3) ou tout du moins une carte à puce contenant la mémoire (7) de ce système. Le système autonome (3) peut être relié au système de lecture (2) par tout moyen connu.

Le base de données centralisée (4) regroupe des informations concernant les animaux d'un groupe donné (cheptel national, ou race, ou groupement d'éleveurs). Les propriétaires ou détenteurs doivent transmettre à cette base de données certaines informations concernant leurs animaux. Les moyens de communication (5) d' informations entre le système autonome (3) et la base de données centralisée (4) peut être réalisé par tout moyen de communication connu, en utilisant le réseau téléphonique cellulaire par exemple.

Il est également possible à des propriétaires ou détenteurs possédant chacun un système autonome (3) de transférer à des tiers automatiquement des informations contenues dans les mémoires (7) de leurs systèmes autonomes.

A cet effet, chaque système autonome (3) comporte un moyen de communication (6) permettant de transmettre des informations à au moins un autre système autonome (3). Les moyens de communication (6) et (6') peuvent par exemple utiliser une liaison filaire, à ondes radio, signaux infrarouges ou tout autre moyen connu.

Selon un mode de réalisation de l'invention, le système de lecture (2), le système autonome (3), les moyens de communication (5) et (6) sont intégrés dans un même boîtier. Ils peuvent cependant être répartis dans différents boîtiers communiquant entre eux par liaison filaire, radio, infra-rouge ou tout autre moyen.

L'invention peut également comporter, dans le même boîtier ou séparément, un dispositif de repérage géographique (8) de type GPS ou autre, permettant de situer de façon certaine le lieu où une information est saisie, lue, reçue ou échangée.

La description qui suit, des différentes étapes de l'utilisation de l'installation permettra de mieux comprendre l'invention.

Des numéros d'identifications sont affectés pour les animaux venant à naître. Chacun de ces numéros est porté sur une boucle par exemple, sous la forme d'un identifiant visuel et éventuellement d'un identifiant électronique. Le propriétaire ou détenteur des animaux fixe la boucle à l'oreille d'un animal. Il identifie alors l'animal dans le système autonome soit en saisissant manuellement son numéro d'identification, soit grâce au système de lecture automatique de l'identifiant. Lorsque le système autonome a identifié l'animal, le propriétaire ou détenteur peut saisir les premières informations concernant cet animal (date de naissance, parents de l'animal...). Ces données sont stockées dans la mémoire du système autonome. Ces informations sont ensuite transmises par le système autonome à la base de données centralisée (4). Il est envisageable que cette transmission se fasse de façon automatique, certifiée et obligatoire dés que l'utilisateur rentre une nouvelle information devant être notifiée à la base de données. Les données transmises concerneront les informations saisies par le propriétaire ou détenteur ainsi que l'identifiant certifié du propriétaire ou détenteur contenu dans la mémoire (7) du système autonome. En retour, la base de données renverra une information validant que les données contenues dans la mémoire du système autonome sont bien enregistrées dans la base de données et leur apportant par la même certification.

Lorsqu'un transporteur par exemple prendra en charge des animaux, le système autonome du propriétaire ou détenteur et le système autonome du transporteur pourront communiquer l'un avec l'autre. Après avoir identifié les animaux, le système autonome du transporteur recevra les informations relatives à ces animaux contenues dans la mémoire du système autonome du propriétaire. Cette transaction sera ensuite mise à jour dans la base de données centralisée, puis, en retour, validée dans la mémoire de chacun des deux appareils.

Dans un autre cas de figure, un acheteur potentiel se trouve à proximité d'un animal. Après lecture de l'identifiant de l'animal, celui-ci communique avec la base de données à partir de son système autonome et récupère les informations relatives à cet animal. Si cet animal l'intéresse, il pourra alors effectuer la transaction avec le propriétaire ou détenteur en faisant communiquer leurs systèmes autonomes respectifs.

En fait, plusieurs utilisateurs peuvent communiquer avec d'autres à partir de l'identifiant de l'animal et/ou de tel ou tel utilisateur.

Dans un autre cas de figure, lorsqu'il n'est pas possible de communiquer immédiatement avec la base de données, le système autonome peut, après lecture de l'identifiant de l'animal, présenter les informations relatives à l'animal telles qu'elles sont enregistrées dans sa mémoire, ou dans celle d'un autre système autonome voisin, tout en précisant, pour chaque information, si elle a été ou non communiquée à la base de données et validée par celle-ci.

Ces exemples ne représentent que quelques-unes des possibilités offertes par l'installation objet de la présente invention et ne sont en aucun cas limitatives.

Selon une variante de l'installation déjà évoquée, certains utilisateurs possèdent un système autonome constitué d'un terminal dont la mémoire est intégrée à l'appareil et d'autres ne possèdent qu'une carte à puce supportant la mémoire concernant les animaux dont ils ont la charge par exemple. Il est dans ce cas possible d'envisager plusieurs types de systèmes autonomes :
Des systèmes autonomes sans mémoire mais avec un ou plusieurs lecteurs de carte à puce, ces systèmes pourraient par exemple être disposés dans les lieux de rencontre entre les propriétaires ou détenteurs afin qu'ils puissent effectuer leurs transactions.
Des systèmes autonomes dédiés à un utilisateur et disposant d'une mémoire intégrée et d'un ou plusieurs lecteurs de carte à puce pour effectuer des transactions avec des utilisateurs qui ne posséderaient pas de système autonome personnel.

L'installation selon l'invention met à la disposition de tous utilisateurs autant de terminaux que nécessaire pouvant communiquer entre l'animal et la base centrale de données ou les dits terminaux pouvant communiquer entre eux à partir de l'identifiant de l'animal concerné.

## Revendications

1. Installation d'identification d'animaux et de gestion des informations relatives aux dits animaux comprenant une base (4) de données centralisée regroupant des informations sur les dits animaux portant un identifiant (1) destiné à être lu par un système de lecture (2), la base (4) de données centralisée, l'identifiant (1) et le système de lecture étant reliés, **caractérisée en ce que** :
- l'installation comprend un ou plusieurs systèmes autonomes (3) de communication pour l'utilisateur,
- le dit système autonome intégrant
- le système (2) de lecture de l'identifiant,
- des moyens (5) de communication avec la base de données centralisée,
- une mémoire (7) intégrant des informations propres à l'animal et destinées à être dupliquées dans la base de données centralisée,
- des moyens de communication (6, 6') directs entre au moins un système autonome (3) et un autre système autonome (3) sans passer par la base de données centralisée.

2. Installation selon la revendication 1 **caractérisée en ce que** la mémoire (7) du ou des systèmes autonomes est amovible.

3. Installation selon la revendication 1 **caractérisée en ce que** la mémoire (7) de chaque système autonome contient des données qui lui sont propres et qui sont dupliquées dans la banque de données centralisée, ces données infalsifiables et uniques sont à usage d'identification de l'utilisateur du système autonome (3).

4. Installation selon la revendication 1, la revendication 2 et la revendication 3 **caractérisée en ce que** la mémoire (7) contient à la fois des informations relatives à l'utilisateur et à l'animal.

5. Installation selon la revendication 1 ou la revendication 2 **caractérisée en ce que** le système de lecture (2) de l'identifiant (1) utilise le principe de la radiofréquence.

6. Installation selon la revendication 3 **caractérisée en ce que** l'identifiant (1) est fixé à l'oreille de l'animal.

7. Installation selon la revendication 3 **caractérisée en ce que** l'identifiant (1) est implanté sous la peau de l'animal.

8. Installation selon la revendication 3 **caractérisée en ce que** l'identifiant (1) est ingéré par l'animal.

9. Installation selon la revendication 1 ou la revendication 2 **caractérisé en ce que** l'identifiant est une marque visuelle lue par un opérateur humain.

10. Installation selon l'une des revendications précédentes **caractérisée en ce que** la mémoire (7) contient des informations concernant des animaux et des informations concernant le détenteur de ladite mémoire.

11. Installation selon l'une des revendications précédentes **caractérisée en ce que** les moyens de communication (5) entre le système autonome et la base de données des informations utilisent un réseau téléphonique.

12. Installation selon l'une des revendications précédentes **caractérisée en ce que** le système de lecture (2), les moyens de communication avec la base de données centralisée (5) et les moyens de communication (6) directs sont intégrés dans un même boîtier.

13. Installation selon l'une des revendications précédentes **caractérisée en ce que** la communication d'informations entre l'utilisateur et le système autonome (3) est réalisée par voie vocale.

14. Installation selon l'une des revendications précédentes **caractérisée en ce que** qu'elle comporte un dispositif de repérage géographique de type GPS ou autre.

15. Procédé d'identification d'animaux et gestion des informations relatives aux dits animaux utilisant l'installation selon l'une des revendications précédentes **caractérisé en ce qu'**il comporte une étape de lecture de l'identifiant (1) de l'animal et de saisie d'informations relatives audit animal dans la mémoire du système autonome (3).

16. Procédé selon la revendication 15 **caractérisé en ce qu'**il comporte une étape de transfert des informations saisies vers la base de données centralisée (4).

17. Procédé selon la revendication 16 **caractérisé en ce qu'**il comporte une étape de renvoi d'une information depuis la base de données (4) vers le système autonome (3), ladite information validant que les données contenues dans la mémoire du système autonome (3) sont bien enregistrées dans la base de données (4).

18. Procédé selon l'une des revendications 15 à 17 **caractérisé en ce qu'**il comporte une étape de communication d'informations entre les mémoires de deux systèmes autonomes (3).

19. Procédé selon l'une des revendications 15 à 18 **caractérisé en ce qu'**il comporte une étape de lecture de l'identifiant (1) d'un animal et de récupération des informations relatives audit animal depuis la base de données (4) vers le système autonome (3).

20. Procédé selon l'une des revendications 15 à 19 **caractérisé en ce qu'**il assure, de façon automatique, certifiée et obligatoire la transmission des nouvelles informations contenues dans le système autonome vers la base de données.

## Patentansprüche

1. Anlage für die Identifizierung von Tieren und die Verwaltung der Informationen bezüglich der besagten Tiere mit einer zentralen Datenbank (4), in der Informationen über die besagten Tiere gesammelt sind, wobei diese Tiere eine Identifikationsmarke (1) tragen, die von einem Lesesystem (2) gelesen werden soll, wobei die zentrale Datenbank (4), die Identifikationsmarke (1) und das Lesesystem miteinander verbunden sind; besagte Anlage ist **dadurch gekennzeichnet, dass**:
- sie ein oder mehrere autonome Kommunikationssysteme (3) für den Anwender umfasst,
- wobei das besagte autonome System folgendes umfasst:
- das System (2) zum Lesen der Identifikationsmarke,
- Mittel (5) für die Kommunikation mit der zentralen Datenbank,
- ein Speicher (7) mit tierspezifischen Informationen, die dazu bestimmt sind, in die zentrale Datenbank kopiert zu werden,
- direkte Kommunikationsmittel (6, 6') zwischen mindestens einem autonomen System (3) und einem anderen autonomen System (3), ohne über die zentrale Datenbank gehen zu müssen.

2. Anlage gemäß Anspruch 1, die **dadurch gekennzeichnet ist, dass** der Speicher (7) des oder der autonomen Systeme herausnehmbar ist.

3. Anlage gemäß Anspruch 1, die **dadurch gekennzeichnet ist, dass** der Speicher (7) jedes autonomen Systems seine eigenen Daten enthält, die in die zentrale Datenbank kopiert werden, wobei diese fälschungssicheren und einmaligen Daten zur Identifizierung des Anwenders des autonomen Systems (3) bestimmt sind.

4. Anlage gemäß Anspruch 1, Anspruch 2 und Anspruch 3, die **dadurch gekennzeichnet ist, dass** der Speicher (7) zugleich Informationen über den Anwender und über das Tier enthält.

5. Anlage gemäß Anspruch 1 oder Anspruch 2, die **dadurch gekennzeichnet ist, dass** das System (2) für das Lesen der Identifikationsmarke (1) das Prinzip der Radiofrequenz verwendet.

6. Anlage gemäß Anspruch 3, die **dadurch gekennzeichnet ist, dass** die Identifikationsmarke (1) am Ohr des Tieres befestigt ist.

7. Anlage gemäß Anspruch 3, die **dadurch gekennzeichnet ist, dass** die Identifikationsmarke (1) unter der Haut des Tieres implantiert ist.

8. Anlage gemäß Anspruch 3, die **dadurch gekennzeichnet ist, dass** die Identifikationsmarke vom Tier aufgenommen wird.

9. Anlage gemäß Anspruch 1 oder Anspruch 2, die **dadurch gekennzeichnet ist, dass** die Identifikationsmarke eine optische, von einem Menschen lesbare Kennzeichnung ist.

10. Anlage gemäß einem der oben genannten Ansprüche, die **dadurch gekennzeichnet ist, dass** der Speicher (7) Informationen über die Tiere und Informationen über den Besitzer des besagten Speichers enthält.

11. Anlage gemäß einem der oben genannten Ansprüche, die **dadurch gekennzeichnet ist, dass** die Mittel für die Kommunikation (5) zwischen dem autonomen System und der Informationsdatenbank ein Telefonnetz verwenden.

12. Anlage gemäß einem der oben genannten Ansprüche, die **dadurch gekennzeichnet ist, dass** das Lesesystem (2), die Mittel für die Kommunikation (5) mit der zentralen Datenbank und die direkten Kommunikationsmittel (6) in einem selben Gehäuse enthalten sind.

13. Anlage gemäß einem der oben genannten Ansprüche, die **dadurch gekennzeichnet ist, dass** die Informationskommunikation zwischen dem Anwender und dem autonomen System (3) auf dem Sprachweg erfolgt.

14. Anlage gemäß einem der oben genannten Ansprüche, die **dadurch gekennzeichnet ist, dass** sie eine Vorrichtung zur geographischen Ortung vom Typ GPS oder eines anderen Typs beinhaltet.

15. Verfahren zur Identifizierung von Tieren und zur Verwaltung der Informationen über die besagten Tiere, das die Anlage gemäß einem der oben genannten Ansprüche verwendet und das **dadurch gekennzeichnet ist, dass** es eine Phase für das Lesen der Identifikationsmarke (1) des Tieres und die Eingabe von Informationen über das besagte Tier in den Speicher des autonomen Systems (3) enthält.

16. Verfahren gemäß Anspruch 15, das **dadurch gekennzeichnet ist, dass** es eine Phase für den Transfer der erfassten Informationen zur zentralen Datenbank (4) enthält.

17. Verfahren gemäß Anspruch 16, das **dadurch gekennzeichnet ist, dass** es eine Phase für das Zurücksenden einer Information von der Datenbank (4) zum autonomen System (3) enthält, wobei die besagte Information bestätigt, dass die im Speicher des autonomen Systems (3) enthaltenen Daten korrekt in der Datenbank gespeichert sind.

18. Verfahren gemäß einem der Ansprüche 15 bis 17, das **dadurch gekennzeichnet ist, dass** es eine Phase für die Kommunikation von Informationen zwischen den Speichern von zwei autonomen Systemen (3) enthält.

19. Verfahren gemäß einem der Ansprüche 15 bis 18, das **dadurch gekennzeichnet ist, dass** es eine Phase für das Lesen der Identifikationsmarke (1) eines Tieres und für das Holen der Informationen bezüglich des besagten Tieres von der Datenbank (4) zum autonomen System (3) enthält.

20. Verfahren gemäß einem der Ansprüche 15 bis 19, das **dadurch gekennzeichnet ist, dass** es automatisch, zertifiziert und obligatorisch die Übertragung neuer, im autonomen System enthaltenen Informationen zur Datenbank gewährleistet.

## Claims

1. Installation for the identification of animals and for managing the information relative to said animals comprising a centralized database (4) collecting information on said animals bearing an identification (1) adapted to be read by a reading system (2), the centralized database (4), the identification (1) and the reading system being connected, **characterized in that**:
- the installation comprises one or several autonomous communication systems for the user,
- said autonomous system integrating
- the reading system (2) of the identification,
- the communication means (5) with the centralized database,
- a memory (7) integrating information peculiar to the animal and adapted to be duplicated in the centralized database,
- direct communication means (6, 6') between at least one autonomous system (3) and another autonomous system (3) without passing through the centralized database.

2. Installation according to claim 1, **characterized in that** the memory (7) of the autonomous system or systems is removable.

3. Installation according to claim 1, **characterized in that** the memory (7) of each autonomous system contains data corresponding to it and which are duplicated in the centralized databank, these unfalsifiable and unique data are for use for the identification of the user of the autonomous system (3).

4. Installation according to claim 1, claim 2 and claim 3, **characterized in that** the memory (7) contains both information relative to the user and to the animal.

5. Installation according to claim 1 or claim 2 **characterized in that** the reading system (2) of the identification (1) uses the principle of radio frequency.

6. Installation according to claim 3, **characterized in that** the identification (1) is fixed to the ear of the animal.

7. Installation according to claim 3 **characterized in that** the identification (1) is implanted beneath the skin of the animal.

8. Installation according to claim 3 **characterized in that** the identification (1) is ingested by the animal.

9. Installation according to claim 1 or claim 2 **characterized in that** the identification is a visible mark read by a human operator.

10. Installation according to one of the preceding claims, **characterized in that** the memory (7) contains information relating to the animals and information relating to the holder of said memory.

11. Installation according to one of the preceding claims **characterized in that** the means (5) for communicating between the autonomous system and the database of the information, use a telephone network.

12. Installation according to one of the preceding claims **characterized in that** the reading system (2), with the centralized database, the communication (5) and the communication means (6) directs are integrated in a same housing.

13. Installation according to one of the preceding claims **characterized in that** the communication of information between the user and the autonomous system (3) is carried out vocally.

14. Installation according to one of the preceding claims **characterized in that** it comprises a device for a geographic location of the GPS type or the like.

15. Process for identifying animals and managing information relative to said animals using the installation according to one of the preceding claims, **characterized in that** it comprises a step of reading the identification (1) of the animal and acquiring information relative to said animal in the memory of the autonomous system (3).

16. Process according to claim 15 **characterized in that** it comprises a step of transferring acquired information toward the centralized database (4).

17. Process according to claim 16 **characterized in that** it comprises a step of returning information from the database (4) to the autonomous system (3), said information validating that the data contained in the memory of the autonomous system (3) are correctly recorded in the database (4).

18. Process according to one of claims 15 to 17 **characterized in that** it comprises a step of communicating information between the memories of the two autonomous systems (3).

19. Process according to one of claims 15 to 18 **characterized in that** it comprises a step of reading the identification (1) of an animal and recovering information relative to said animal from the database (4) toward the autonomous system (3).

20. Process according to one of claims 15 to 19 **characterized in that** it ensures, automatically, certifiably and necessarily the transmission of new information contained in the autonomous system to the database.
